# FASCICULE DE BREVET EUROPEEN

(11) **EP 1 544 946 B1**
(45) Date de publication et mention de la délivrance du brevet: **28.03.2007**
(21) Numéro de dépôt: 04106362.9
(22) Date de dépôt: 07.12.2004
(51) Int. Cl.: H01R 4/30, F16B 39/00

(54) **DISPOSITIF ANTIDESSERRAGE DE VIS OU CROU**
Sicherungsanordnung für Schrauben und Muttern
Anti-release device for screws and nuts

(30) Priorité: 16.12.2003 FR 0314724
(43) Date de publication de la demande: 22.06.2005
(73) Titulaire: AIRBUS France, 31060 Toulouse (FR)
(72) Inventeur: TOURNIER, Gilles, 31490, LEGUEVIN (FR); KLEPKA, Stéphanie, 31650, SAINT ORENS (FR)
(74) Mandataire: Schmit, Christian Norbert Marie

(56) Documents cités:
- DE-A- 1 961 792
- GB-A- 142 754
- PATENT ABSTRACTS OF JAPAN vol. 1997, no. 08, 29 août 1997 (1997-08-29) & JP 09 092355 A (YAZAKI), 4 avril 1997 (1997-04-04)

## Description

La présente invention concerne un dispositif s'opposant au desserrage d'une vis ou d'un écrou, notamment une vis de serrage d'une cosse électrique sur une patte de contact d'un élément de connexion.

Le document JP 09092355 divulgue une structure à verrou pour borne.

Les cosses sont en particulier des cosses de terminaison de câbles électriques et sont pour ce faire généralement serties sur les fils à raccorder.

Le raccordement électrique de cosses sur des équipements électriques tels que disjoncteurs notamment utilisés dans l'aéronautique est fréquemment réalisé à l'aide de cosses à plage ronde comportant un trou central, ces cosses étant connectées aux pattes de contact à l'aide de dispositifs tels que vis de serrage pourvues d'une partie filetée se vissant soit directement dans les pattes soit se vissant dans un écrou prisonnier solidaire des pattes, ou tels que des tiges filetées, solidaires des pattes, sur lesquelles viennent se serrer un écrou de serrage.

Dans les deux cas, les cosses sont traversées par la partie filetée et serrées sur les pattes de contact. Ces systèmes permettent une bonne connexion mais un risque de desserrage des vis ou écrous existe notamment causé par des vibrations ou des manipulations sur les câbles au voisinage des cosses.

La présente invention vise à perfectionner les dispositifs de raccordement de cosses sur pattes de contact et notamment de proposer un dispositif de raccordement s'opposant au desserrage des vis ou écrous de serrage.

Pour ce faire, la présente invention concerne principalement un dispositif de connexion d'une cosse électrique sur une patte de contact comportant un dispositif antidesserrage pour moyen de serrage tel que tête de vis ou écrou de serrage, le dispositif antidesserrage comportant principalement une plaquette pourvue d'au moins un élément de cliquet, se positionnant entre ledit moyen de serrage et la cosse et fixe en rotation par rapport à la patte de contact lors du serrage du moyen de serrage, ce dernier comportant un élément de denture coopérant, en fin de serrage, avec ledit élément de cliquet pour s'opposer au dévissage du moyen de serrage.

La plaquette peut notamment comporter une base de réception dudit moyen de serrage, être pourvue d'un perçage de réception d'une partie filetée et d'au moins un moyen d'arrêt en rotation de la plaquette par rapport à la patte de contact.

Avantageusement, l'élément de denture est réalisé sur une collerette dudit moyen de serrage.

Selon un premier mode de réalisation de l'invention le moyen d'arrêt en rotation est constitué par un rebord latéral inférieur de la plaquette.

L'élément de cliquet peut notamment être constitué d'un ergot porté par un rebord supérieur latéral de la plaquette.

En mode de réalisation particulier de l'invention, la plaquette peut être réalisée sous forme d'une rondelle, le moyen de serrage pouvant être un écrou se vissant sur une tige filetée solidaire de la patte de contact.

La rondelle peut avantageusement comporter des bras de retenue s'encliquetant sur un épaulement d'une collerette de l'écrou.

L'élément de cliquet peut être constitué d'au moins une languette ressort découpée dans la rondelle et pliée dans la direction de dents réalisées dans une face inférieure de l'écrou, le perçage central pouvant comporter une dent de polarisation coopérant avec une rainure de la tige filetée pour former moyen d'arrêt en rotation de la rondelle sur la tige filetée.

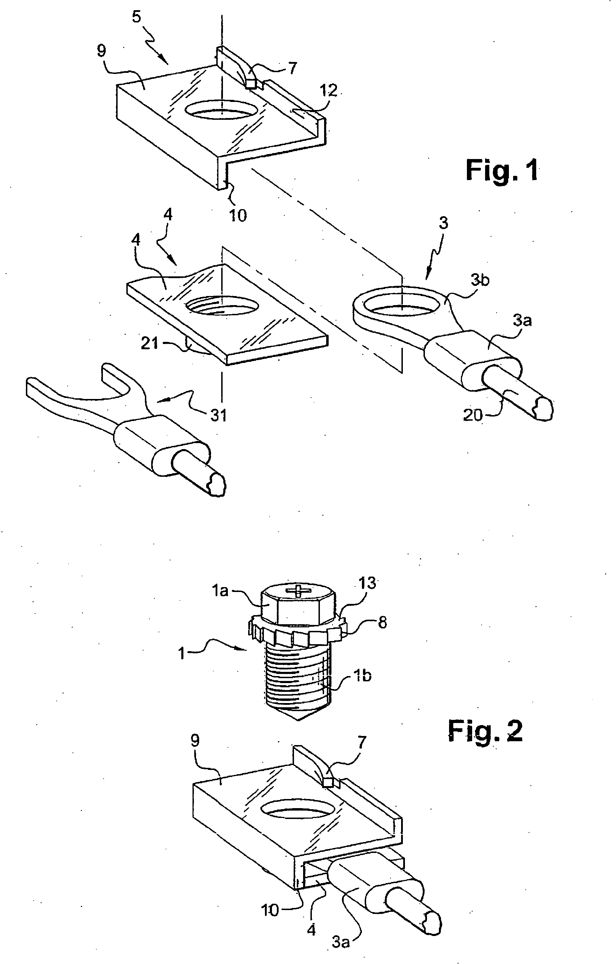

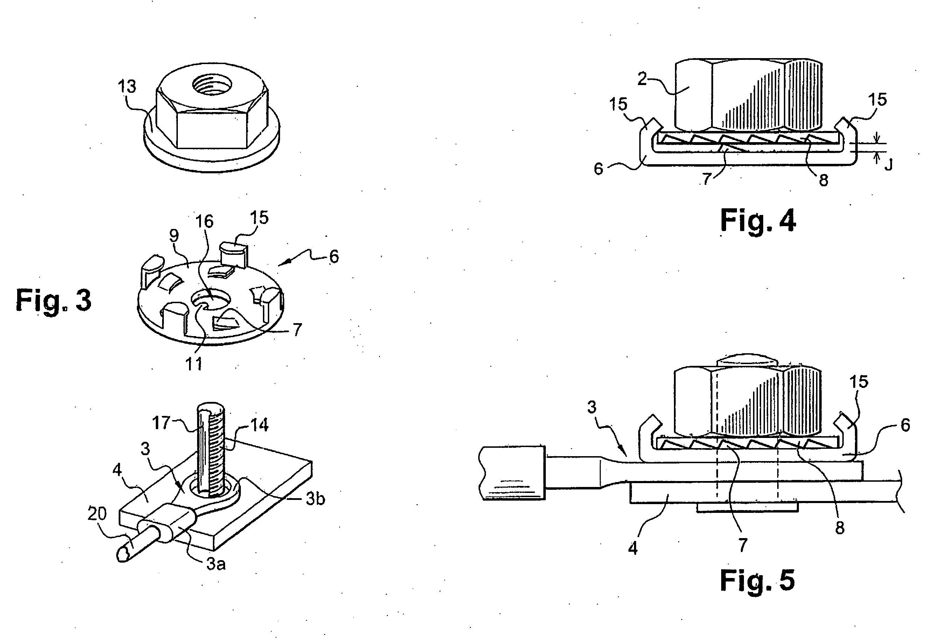

D'autres aspects et avantages de l'invention seront mieux compris à la lecture de la description qui va suivre d'exemples de réalisation non limitatifs de l'invention en référence aux figures qui représentent:
En figure 1: une vue en éclaté d'un premier exemple de réalisation du dispositif selon l'invention;
En figure 2: le dispositif de la figure 1 en perspective en cours de montage;
En figure 3: une vue en éclaté d'un second exemple de réalisation du dispositif selon l'invention;
En figure 4: un détail en vue de côté du dispositif de la figure 3;
En figure 5: le dispositif de la figure 3 monté en vue de côté.

Le dispositif selon l'invention a pour but de s'opposer à un desserrage d'une cosse 3 de connexion électrique sur une patte 4 de contact électrique.

Les cosses 3 notamment utilisées pour le raccordement de disjoncteurs électriques par des câbles 20 sont généralement des cosses comportant une section 3a de raccordement au câble 20, notamment par sertissage sur l'âme du câble, et comportant une section 3b de connexion par serrage sur une patte 4 de connexion de l'équipement à connecter.

Selon l'exemple représenté en figures 1 et 3, la section 3b est réalisée par un anneau métallique venant se positionner autour du fût fileté d'une vis 1 ou d'une tige filetée 14 mais l'invention est aussi applicable à des cosses à fourche 31.

La connexion électrique pour ce type de cosses est réalisée, dans le cas du mode de réalisation de la figure 1, par mise en pression de la surface inférieure de la section de connexion sur la patte 4 à l'aide d'un moyen de serrage tel que la tête d'une vis 1 se vissant dans la patte ou dans un écrou prisonnier 21 solidaire de la patte 4, ou bien, comme représenté dans l'exemple des figures 3 à 5, à l'aide d'un moyen de serrage tel qu'un écrou 2 se vissant sur une tige filetée 14 solidaire de la patte 4.

Ainsi le moyen de serrage appuie sur la cosse 1 et l'applique sur la patte 4.

Un tel mode de connexion offre un excellent contact électrique du fait de la pression de contact appliquée mais présente un risque de desserrage, en présence de vibrations ou suite à une traction latérale sur le câble 20, pouvant conduire à un accroissement dans le temps de la résistance de contact entre la cosse et la patte ce qui lors du passage d'un courant cause un échauffement détériorant encore la résistance de contact et pouvant conduire par effet cumulatif, non seulement à la rupture de la connexion mais encore à une destruction de la cosse et/ou de la patte de contact.

L'invention telle que représentée dans les exemples pallie à ce problème en s'opposant au desserrage du moyen de contact en intercalant une plaquette 5, 6 entre le moyen de serrage 1, 2 et la cosse 3, cette plaquette étant pourvue d'au moins un élément de cliquet 7, fixe en rotation par rapport à la patte 4 de contact lors du serrage du moyen de serrage 1, 2, l'élément de serrage comportant pour sa part un élément de denture 8 complémentaire de l'élément de cliquet pour s'opposer au dévissage du moyen de serrage en fin de serrage.

Pour parfaire l'immobilisation du moyen de serrage, la plaquette 5, 6 comporte en outre au moins un moyen 10, 11 d'arrêt en rotation de la plaquette par rapport à la patte 4 de contact.

Selon l'exemple des figures 1 et 2, la plaquette est un élément de forme sensiblement rectangulaire, pourvu d'un trou de réception d'une vis 1 de serrage et se positionnant sur la cosse 3, comportant un moyen d'arrêt en rotation par rapport à la patte 4 constitué par un rebord latéral inférieur 10 de la plaquette 5 et pour lequel l'élément de cliquet 7 est constitué d'un ergot porté par un rebord supérieur latéral 12 de la plaquette.

Le montage est fait comme suit et une position intermédiaire est représentée en figure 2.

La plaquette 5 positionnée sur la cosse 3 est appliquée sur la patte 4, la vis 1 est insérée dans l'ensemble plaquette-cosse puis vissée par sa partie filetée 1 b dans l'écrou borgne 21 solidaire de la patte 4. Lors du vissage de la vis, le rebord latéral inférieur 10 se positionne le long de la patte pour immobiliser la plaquette en rotation et le cliquet 7 s'encliquette avec la denture 8 réalisée en périphérie d'une collerette 13 en partie inférieure de la tête de vis 1 a.

Ce mode de réalisation de l'invention présente l'avantage de non seulement s'opposer au dévissage de la vis, par l'encliquetage du cliquet 7 avec la denture 8, mais aussi de s'opposer à un mouvement en rotation de la cosse du fait de la présence du rebord latéral inférieur 10. Dans ce cadre il est à noter qu'il est possible de pourvoir la plaquette 5 de parties de rebords latéraux inférieurs des deux côtés pour immobiliser totalement la cosse angulairement.

Selon l'exemple des figures 3 à 5, s'appliquant à un raccordement utilisant une tige filetée 14 solidaire de la patte 4 et un écrou 2 se vissant sur la tige filetée 14 et appliquant la cosse sur la patte 4, la plaquette est réalisée sous forme d'une rondelle 6 pourvue d'un perçage central 16 de réception de la tige filetée 14.

Selon ce mode de réalisation, l'élément de cliquet 7 est constitué d'au moins une languette ressort découpée dans la rondelle et pliée dans la direction de la denture 8 réalisée ici annulairement sur une face inférieure de l'écrou
toujours selon cet exemple, pour bloquer la rondelle 6 en rotation par rapport à la patte 4 et former moyen d'arrêt en rotation de la rondelle sur la tige filetée, le perçage central 16 comporte une dent 11 d'arrêt en rotation coopérant avec une rainure 17 de la tige filetée 14. Une configuration pour laquelle un élément de rebord inférieur plié à partir de la rondelle tel que décrit dans le mode de réalisation de la figure 1 reste toutefois envisageable.

De manière avantageuse pour rendre plus aisée la manipulation du dispositif et le rendre imperdable, la rondelle telle que représentée en figure 3 est rendue solidaire de l'écrou 2 et comporte des bras 15 de retenue s'encliquetant sur un épaulement d'une collerette 13 de l'écrou.

Comme représenté en figure 4, les bras 15 sont suffisamment allongés pour laisser un jeu J lorsque l'écrou n'est pas encore vissé de façon à éviter l'engrènement des cliquets 7 avec la denture 8 lors du début du vissage ce qui évite d'appliquer des efforts de contrainte sur la dent 11 et de causer un effort de vissage trop important. Par contre en position de fin de vissage comme représenté en figure 5, les cliquets 7 sont fermement appliqués contre la denture et offrent une grande résistance au dévissage de l'écrou.

Le dispositif selon l'invention empêche donc tout dévissage intempestif de la vis ou de l'écrou tout en autorisant un dévissage par action volontaire d'un opérateur.

L'invention n'est bien entendu pas limitée aux exemples représentés et englobe les variantes de réalisation, notamment la configuration de plaquette de la figure 1 est applicable à un dispositif de raccordement de type écrou-tige filetée moyennant la réalisation d'une denture périphérique sur l'écrou 2 similaire à la denture de la vis 1.

## Revendications

1. - Dispositif de connexion d'une cosse électrique (3) sur une patte de contact (4), comportant un dispositif antidesserrage pour moyen de serrage (1, 2) tel que tête de vis (1) ou écrou (2) de serrage, le dispositif antidesserrage comportant principalement une plaquette (5, 6) pourvue d'au moins un élément de cliquet (7), se positionnant entre ledit moyen de serrage (1, 2) et la cosse (3) et fixe en rotation par rapport à la patte de contact (4) lors du serrage du moyen de serrage (1, 2), ce dernier comportant un élément de denture (8) coopérant, en fin de serrage, avec ledit élément de cliquet (7) pour s'opposer au dévissage du moyen de serrage (1, 2).

2. - Dispositif selon la revendication 1 **caractérisé en ce que** la plaquette (5, 6) comporte une base (9) de réception dudit moyen de serrage (1, 2), pourvue d'un perçage central de réception d'une partie filetée (1b, 14), et comporte au moins un moyen (10, 11) d'arrêt en rotation de la plaquette par rapport à la patte (4) de contact.

3. - Dispositif selon la revendication 1 ou 2 **caractérisé en ce que** l'élément de denture (8) est réalisé sur une collerette (13) dudit moyen de serrage,

4. - Dispositif selon l'une quelconque des revendications 1 à 3 **caractérisé en ce que** le moyen d'arrêt en rotation est constitué par un rebord latéral inférieur (10) de la plaquette (5).

5. - Dispositif selon l'une quelconque des revendications 1 à 4 **caractérisé en ce que** l'élément de cliquet (7) est constitué d'un ergot porté par un rebord supérieur latéral (12) de la plaquette.

6. - Dispositif selon l'une quelconque des revendications 1 à 3 **caractérisé en ce que** la plaquette est réalisée sous forme d'une rondelle (6), le moyen de serrage étant un écrou (2) se vissant sur une tige filetée (14) solidaire de la patte (4) de contact.

7. - Dispositif selon la revendication 6 **caractérisé en ce que** la rondelle (6) comporte des bras (15) de retenue s'encliquetant sur un épaulement d'une collerette (13) de l'écrou.

8. - Dispositif selon la revendication 6 ou 7 **caractérisé en ce que** l'élément de cliquet (7) est constitué d'au moins une languette ressort découpée dans la rondelle et pliée dans la direction de dents (8) réalisées dans une face inférieure de l'écrou.

9. - Dispositif selon l'une quelconque des revendications 6 à 8 **caractérisé en ce que** le perçage central (16) comporte une dent d'arrêt en rotation (11) coopérant avec une rainure (17) de la tige filetée (14) pour former moyen d'arrêt en rotation de la rondelle sur la tige filetée.

## Claims

1. A device for connection of an electrical terminal (3) to a contact lug (4) having an anti-loosening device for locking members such as the head of a locking screw (1) or nut (2), the anti-loosening device essentially comprising a plate (5, 6) having at least one catch element (7) situated between the locking member (1, 2) and the terminal (3), and being rotationally stationary in relation to the contact lug (4) when the locking member (1, 2) is fastened, the latter having a tooth element (8) that interlocks with said catch element (7) at the end of the screwing process to resist unscrewing of the locking member (1, 2).

2. The device as claimed in claim 1, wherein said plate (5, 6) comprises a base (9) for receiving the locking member (1, 2), have a bore for receiving a threaded part (1b, 14) and at least one stop (10, 11) for inhibiting rotation of the plate in relation to the contact lug (4).

3. The device as claimed in claim 1 or 2, wherein the tooth element (8) is fashioned on a collar (13) of the plate (5).

4. The device according to any one of claims 1 to 3, wherein the stop comprises a lower lateral flange (10) of the supporting member.

5. The device according to any one of claims 1 to 4, wherein the catch element (7) is constituted of a nib placed on an upper lateral flange (12) of the plate (5).

6. The device according to any one of claims 1 to 5, wherein the plate (5) is in the form of a washer (6), the locking means being a nut (2) screwing onto a threaded shank (14) that is part of the contact lug.

7. The device as claimed in claim 6, wherein the washer (6) has anchoring arms (15) being engageable with a shoulder of a nut collar (13).

8. The device as claimed in claim 6 or 7, wherein the catch element (7) comprises a least one spring tab cut out from the washer (6) and folded in the direction of some teeth elements (8) fashioned in a lower surface of the nut (2).

9. The device according to any one of claims 6 to 8, wherein the central bore (16) comprises a stop member (11) working with a groove (17) of the threaded shank (14) to form a stop preventing the washer from rotating on the threaded shank (14).

## Patentansprüche

1. Vorrichtung zum Verbinden einer elektrischen Anschlusshülse (3) mit einer Kontaktzunge (4), mit einer Lockerungsverhinderungsvorrichtung für ein Klemmmittel (1, 2) wie etwa einen Schraubenkopf (1) oder eine Klemmmutter (2), wobei die Lockerungsverhinderungsvorrichtung hauptsächlich ein Plättchen (5, 6) umfasst, das mit wenigstens einem Einrastelement (7) versehen ist und sich zwischen dem Klemmmittel (1, 2) und der Anschlusshülse (3) anordnet und sich bei der Klemmung des Klemmmittels (1, 2) in Bezug auf die Kontaktzunge (4) rotatorisch fixiert, wobei das Klemmmittel ein Zahnelement (8) aufweist, das am Ende der Klemmung mit dem Einrastelement (7) zusammenwirkt, um sich einem Losschrauben des Klemmmittels (1, 2) zu widersetzen.

2. Vorrichtung nach Anspruch 1, **dadurch gekennzeichnet, dass** das Plättchen (5, 6) eine Basis (9) für die Aufnahme des Klemmmittels (1, 2) umfasst und mit einer mittigen Durchlochung für die Aufnahme eines Gewindeabschnitts (1b, 14) versehen ist und wenigstens ein Drehanschlagmittel (10, 11) für das Plättchen in Bezug auf die Kontaktzunge (4) umfasst.

3. Vorrichtung nach Anspruch 1 oder 2, **dadurch gekennzeichnet, dass** das Zahnelement (8) an einem Kranz (13) des Klemmmittels ausgebildet ist.

4. Vorrichtung nach einem der Ansprüche 1 bis 3, **dadurch gekennzeichnet, dass** das Drehanschlagmittel durch einen unteren seitlichen Rand (10) des Plättchens (5) gebildet ist.

5. Vorrichtung nach einem der Ansprüche 1 bis 4, **dadurch gekennzeichnet, dass** das Einrastelement (7) aus einer Nase gebildet ist, die von einem oberen seitlichen Rand (12) des Plättchens getragen ist.

6. Vorrichtung nach einem der Ansprüche 1 bis 3, **dadurch gekennzeichnet, dass** das Plättchen in Form einer Unterlegscheibe (6) verwirklicht ist, wobei das Klemmmittel eine Mutter (2) ist, die auf einen Gewindestift (14) geschraubt wird, der mit der Kontaktzunge (4) fest verbunden ist.

7. Vorrichtung nach Anspruch 6, **dadurch gekennzeichnet, dass** die Unterlegscheibe (6) Haltearme (15) aufweist, die an einer Schulter eines Kranzes (13) der Mutter einrasten.

8. Vorrichtung nach Anspruch 6 oder 7, **dadurch gekennzeichnet, dass** das Einrastelement (7) aus wenigstens einer Federzunge gebildet ist, die aus der Unterlegscheibe ausgestanzt und in Richtung der Zähne (8), die in einer Unterseite der Mutter verwirklicht sind, umgebogen ist.

9. Vorrichtung nach einem der Ansprüche 6 bis 8, **dadurch gekennzeichnet, dass** die mittige Durchlochung (16) einen Drehanschlagzahn (11) aufweist, der mit einer Nut (17) des Gewindestifts (14) zusammenwirkt, um ein Drehanschlagmittel für die Unterlegscheibe an dem Gewindestift zu bilden.
